# Europäisches Patentamt

# European Patent Office

# Office européen des brevets

(19)

(11) Veröffentlichungsnummer: **0 097 900**

**B1**

(12)

# EUROPÄISCHE PATENTSCHRIFT

(45) Veröffentlichungstag der Patentschrift:
31.05.89

(21) Anmeldenummer: **83105995.1**

(22) Anmeldetag: **20.06.83**

(51) Int. Cl.⁴: **C 01 G 49/02,** H 01 F 1/11

(54) **Verfahren zur Herstellung von nadelförmigen, ferrimagnetischen Eisenoxiden.**

(30) Priorität: **30.06.82 DE 3224325**

(43) Veröffentlichungstag der Anmeldung:
**11.01.84 Patentblatt 84/2**

(45) Bekanntmachung des Hinweises auf die Patenterteilung:
**31.05.89 Patentblatt 89/22**

(84) Benannte Vertragsstaaten:
**DE FR GB NL**

(56) Entgegenhaltungen:
EP-A-0 078 950
DE-A-2 064 804
DE-A-2 212 435
DE-A-2 735 316
FR-A-1 568 474
FR-A-2 369 214

(73) Patentinhaber: **BASF Aktiengesellschaft, Carl-Bosch- Strasse 38, D-6700 Ludwigshafen (DE)**

(72) Erfinder: **Ohlinger, Manfred, Dr., Anselm-Feuerbach- Strasse 13, D-6710 Frankenthal (DE)**
Erfinder: **Vaeth, Guenter, Woogstrasse 35, D-6703 Limburgerhof (DE)**
Erfinder: **Rudolf, Peter, Dr., Wiesenstrasse 1, D-6708 Neuhofen (DE)**
Erfinder: **Sarnecki, Wilhelm, Dr., Woogstrasse 48, D-6703 Limburgerhof (DE)**
Erfinder: **Jakusch, Helmut, Dr., Lorscher Ring 6C, D-6710 Frankenthal (DE)**
Erfinder: **Koester, Eberhard, Dr., Max- Slevogt-Strasse 23, D-6710 Frankenthal (DE)**
Erfinder: **Melzer, Milena, Kirchenstrasse 116, D-6700 Ludwigshafen (DE)**

**Beschreibung**

Die Erfindung betrifft ein Verfahren zur Herstellung nadelförmiger ferrimagnetischer Eisenoxide durch Reduktion von Gamma-Eisen(III)-oxidhydroxid bei Temperaturen zwischen 280 und 620°C mit in diesem Temperaturbereich in Gegenwart von Eisenoxid zersetzlichen organischen Verbindungen zum Magnetit und gegebenenfalls anschließender Oxidation des Magnetits mit sauerstoffhaltigen Gasen bei 150 bis 450°C zum nadelförmigen ferrimagnetischen Eisenoxid der Formel $FeO_x$ mit Werten für x von größer 1,33 bis 1,50.

Nadelförmige ferrimagnetische Eisenoxide werden seit langem in großem Umfang als magnetisierbares Material bei der Herstellung von magnetischen Aufzeichnungsträgern eingesetzt. Zur Herstellung des vor allem verwendeten Gamma-Eisen(III)oxids sind bereits eine Vielzahl von Verfahren bekannt geworden. So beschreibt bereits die GB-A-675 260 ein Verfahren zur Gewinnung von Gamma-Eisen(III)oxid, bei welchem nadelförmiges α-Eisenoxidhydroxid (Goethit) zum α-Eisen(III)oxid entwässert, in reduzierender Atmosphäre bei mehr als 300°C zum Magnetit umgewandelt und an Luft bei Temperaturen unterhalb 450°C zum nadelförmigen Gamma-Eisen(III)oxid oxidiert wird. Im Verlaufe der Bemühungen zur Verbesserung der kristallinen, mechanischen und auch magnetischen Eigenschaften solcher Materialien wurde dieser Prozeß in seinen einzelnen Stufen mehrfach variiert, sowie gleichfalls durch Änderung der Einsatzstoffe abgewandelt.

So ist es auch bereits bekannt, daß sich ferrimagnetische Eisenoxide durch Erhitzen von Eisenoxidhydroxiden mit organischen Stoffen herstellen lassen. Dabei werden die organischen Stoffe zersetzt und die Eisenoxidhydroxide zu Magnetit reduziert, der dann entweder selbst als Magnetpigment verwendet werden oder in der beschriebenen Weise zum α-Eisen(III)-oxid oxidiert werden kann. Schon in einer in der DE-C-801 352 offenbarten Verfahrensweise werden unmagnetische Eisenoxide durch Behandeln mit Salzen kurzkettiger Carbonsäuren und anschließendem Erhitzen in Magnetit überführt. Gemäß der US-A-2 900 236 ist die Reduktion von $α-Fe_2O_3$ oder α-FeOOH mit allen organischen Stoffen möglich, die unterhalb 540°C mit niedrigem Asche- und Teergehalt cracken. In der Folge wurde noch mehrmals die Reduktion der α-Eisenoxide mit organischen Stoffen beschrieben, z. B. mit höheren Kohlenwasserstoffen, Alkoholen, Aminen, Fettsäuren oder deren Salzen, mit Öl, Fett oder Wachs (DE-A-2 064 804, DE-C-91 017, DE-B-1 203 656, DE-B-1 771 327). Auch beim γ-FeOOH ist die Reduktion mit Kokosnußölfettsäure beschrieben (DE-B-2 212 435). Wesentlich bei diesen Verfahren ist ein gutes Mischen der organischen Verbindungen mit dem Eisenoxidhydroxid oder ein Auftragen als sehr dünne Schicht auf das Oxid. Zu diesem Zweck wird beispielsweise gemäß der DE-A-2 064 804 das verwendete Eisenoxid mit einer flüssigen organischen Verbindung getränkt und der Überschuß an organischer Verbindung wieder abgetrennt. Feste organische Stoffe werden in einem Lösungsmittel gelöst und als Lösung mit dem Eisenoxid in Berührung gebracht. Es sind auch Ausrüstungsverfahren beschrieben, bei denen wäßrigen Dispersionen der Eisenoxidhydroxide wasserlösliche oder wasserlöslich gemachte organische Verbindungen zugesetzt werden. So werden nach der DE-B-1 203 656 aus Aufschlämmungen von Eisenoxiden in Lösungen von wasserlöslichen Seifen durch Zusatz eines entsprechenden Kations wasserunlösliche Seifen auf das Eisenoxid aufgefällt. Wie in den DE-B-1 771 327 und DE-B-2 212 435 beschrieben, können die Eisenoxide in wäßriger Suspension mit wasserlöslichen Seifen von Monocarbonsäuren behandelt und dann die Fettsäuren durch Ansäuern ausgefällt werden. Eine andere Möglichkeit besteht darin, eine geeignete Säure zu verwenden, die durch Zugabe von Morpholin wasserlöslich gemacht wird. Zusätzlich ist es notwendig, durch besonders wirksame Mischer oder durch Temperaturerhöhung für eine innige Mischung zu sorgen. Die Ausrüstung von α-Eisenoxiden bzw. α-Eisenoxidhydroxiden in wäßriger Dispersion läßt sich auch mit organischen Verbindungen von Betainstruktur (DE-B-2 428 875), mit Alkylphenolen (DE-B-2 447 386) bzw. mit wasserlöslichen Verbindungen der Formel $(R^1R^2R^3)P=O$ (DE-A-2 520 643) durchführen. Auch ist der Zusatz von wasserlöslichen Seifen bereits bei der Herstellung der Eisenoxidhydroxide bekannt (DE-C-91 017). Im alkalischen Medium lassen sich auch die langkettigen Fettsäuren selbst verwenden, aus denen sich dann mit dem Alkali die Seife bildet. Wie in der DE-C-74 306 beschrieben, beeinflussen diese Seifen dabei gleichzeitig aber auch die Geometrie der gebildeten Eisenoxidhydroxide und werden neben anderen grenzflächenaktiven Stoffen deshalb z. B. zur Steuerung des Längen-Breiten-Verhältnisses eingesetzt. Zu diesem Zweck können auch als Schutzkolloide wirkende wasserlösliche makromolekulare Stoffe eingesetzt werden, wie z. B. Dextran, Polyvinylalkohol u.a.. Mit steigender Konzentration der grenzflächenaktiven Stoffe bzw. der Schutzkolloide in der Reaktionslösung nimmt dabei das Längen-Breiten-Verhältnis der gebildeten Eisenoxidhydroxidkristalle stark ab. Gemäß der DE-A-2 461 937 werden bei der Synthese von α-FeOOH carboxylgruppenhaltige Polymere zugesetzt, um besonders rauscharme Magnetpigmente zu erhalten. Voraussetzung für die Anwendung dieser Polymeren sind freie Carboxylgruppen. Diese Verbindungen müssen deshalb eine Säurezahl von mindestens 50 aufweisen. Alle genannten Verhindungen weisen damit gleichzeitig eine hydrophile sowie eine hydrophobe Komponente auf und sind dadurch zumindest etwas wasserlöslich; sie sind polar und haben grenzflächenaktiven oder Schutzkolloidcharakter. Nachteilig ist bei derartigen Verbindungen, daß sie häufig nur in bestimmten pH-Bereichen existenzfähig sind, so z. B. die Seifen nur im alkalischen Bereich. Weiter sind zu ihrer völligen Lösung in Wasser oftmals höhere Temperaturen bzw. Hilfsmittel erforderlich. Häufig enthalten sie Heteroatome, wie z. B. S, P, N, die dann bei der weiteren Umsetzung der Eisenoxidhydroxide auch nach der Umwandlung zum $γ-Fe_2O_3$ noch als anorganische Reste auf den Pigmentpartikeln verbleiben. Das kann in einigen Fällen für den Formerhalt erwünscht sein, verschlechtert aber im allgemeinen als nichtmagnetischer Anteil die Magnetwerte und erschwert das Einarbeiten der magnetischen Materialien in die filmbildenden organischen Polymeren. Ein weiterer Nachteil der geschilderten Verfahrensweisen besteht darin, daß die angegebenen Stoffe auf fertig hergestellte oder zumindest abgetrennte und gewaschene Eisenoxidhydroxide aufgebracht werden. Dabei läßt sich trotz guter Dispergierung nicht vermeiden, daß mehr oder weniger zufällig gebildete und deshalb verschieden große Agglomerate gleichzeitig umhüllt werden, d.h. die Ausrüstung wird uneinheitlich. Daraus resultieren nach der Weiterverarbeitung magnetisch uneinheitliche Eisenoxide. Außerdem verlangt eine solche Ausrüstung zusätzliche Verfahrensschritte wie Wiederaufschlämmen, nochmalige Filtration und nochmaliges Waschen.

Es wäre deshalb wünschenswert, die Ausrüstungsstoffe schon vor, während oder nach der Herstellung der Eisenoxidhydroxide dem Reaktionsgemisch zuzusetzen. Hier stören jedoch die oben genannten Nachteile besonders, da Zusammensetzung, Partikelgröße und -form der Eisenoxidhydroxide stark von den Verfahrensparametern, z. B. Temperatur und pH-Wert, abhängen, so daß diese nicht beliebig variiert werden können. Häufig werden organische Stoffe während der Reaktion zugegeben, um die Partikelform und -größe der Pigmente zu beeinflussen. In diesen Fällen werden die eingesetzten Mengen von der angestrebten Partikelgeometrie her bestimmt und können z. B. nicht im Hinblick auf optimale spätere Reduktion festgelegt werden. Ein so starker Einfluß auf das Kristallverfahren selbst kann aber durchaus auch unerwünscht sein. In jedem Fall störend wirkt sich die Neigung der o.a. Verbindungen zum Schäumen aus. Eisenoxidhydroxide werden in einer Dreiphasenreaktion fest - flüssig - gasförmig hergestellt, für die gutes Durchmischen der Komponenten z. B. durch heftiges Rühren und Einleiten eines Gasstromes hoher Geschwindigkeit unerläßlich sind. Dieses Durchmischen ist bei schäumenden Reaktionsgemischen nicht möglich, ebenso ist das Abtrennen der Fällungen z. B. durch Dekantieren und das Auswaschen erschwert. Außerdem treten dabei häufig unerwünschte Flotationserscheinungen während der Reaktion auf. Des weiteren erleichtert die hydrophile Komponente der bisher verwendeten Substanzen zwar die Anlagerung an das Eisenoxidhydroxid, gleichzeitig aber werden dadurch leicht auch Salze bzw. Ionen aus der Reaktionslösung mit der Umhüllung eingeschlossen, die sich dann nur noch schwer wieder auswaschen lassen.

Es bestand daher die Aufgabe nach Verfahren zu suchen, welche die geschilderten Nachteile nicht aufweisen und nadelförmige ferrimagnetische Eisenoxide liefern, welche sich in ihren magnetischen Eigenschaften, insbesondere in einer hohen Koerzitivfeldstärke hinsichtlich einer sehr engen Schaltfeldstärkenverteilung auszeichnen und sich dadurch für die Herstellung rauscharmer magnetischer Aufzeichnungsträger eignen.

Es wurde nun überraschenderweise gefunden, daß sich nadelförmige ferrimagnetische Eisenoxide durch Versetzen von Eisen(II)chloridlösungen mit Alkali- oder Erdalkalibasen und Oxidieren des Eisen(II)hydroxid-Niederschlags mittels sauerstoffhaltiger Gase zum Gamma-Eisen(III)oxidhydroxid. Reduktion des Gamma-Eisen(III)oxidhydroxids bei Temperaturen zwischen 280 und 620°C mittels in diesen Temperaturbereich in Gegenwart von Eisenoxid zersetzlichen organischen Verbindungen zum Magnetit und gegebenenfalls anschließende Oxidation des Magnetits mit sauerstoffhaltigen Gasen bei 150 bis 450°C zum nadelförmigen ferrimagnetischen Eisenoxid der Formel $FeO_x$ mit Werten für x von größer 1,33 bis 1,50, aufgabengemäß herstellen lassen, wenn die organische Verbindungen in der Form von unpolaren Fettsäureglycerinestern in einer Menge von 0,5 bis 10 Gew.-%, bezogen auf das Eisenoxidhydroxid, in die während der Synthese des Gamma-Eisen(III)oxidhydroxid vorhandene Suspension eingebracht werden.

Das für das erfindungsgemäße Verfahren geeignete nadelförmige Gamma-Eisen(III)oxidhydroxid, u.a. auch als Lepidokrokit bezeichnet, ist bekannt, ebenso seine Herstellung. Es ist bekannt, es beispielsweise durch Ausfällen von Eisen(II)-hydroxid aus einer Eisen (II)chloridlösung mit Ammoniak bei pH = 7 und einer Temperatur von 20 bis 50°C und durch anschließende Oxidation des ausgefällten Hydroxids mit Luft unter Beibehaltung des pH-Wertes herzustellen (Schwertmann, Zeitschrift f. Anorg. Chemie 298 (1959), 337 - 348). Aus der DE-C-1 223 352 ist ein weiteres Verfahren zur Herstellung des Lepidokrokits bekannt, bei dem die Keimbildung durch Fällung von Eisen(II)salzlösungen mit Alkali- oder Erdalkalibasen und Oxidation des Eisen (II)-hydroxids oder -carbonats mit Sauerstoff, Luft, organischen Nitroverbindungen oder anderen Oxidationsmitteln erfolgt und gegebenenfalls ein Keimwachstums des Lepidokrokits in Eisen(II)salzlösungen entweder in Gegenwart von metallischem Eisen oder in Eisen(II)salzlösungen bei gleichzeitiger Zugabe äquivalenter Mengen von Eisen (II)-ionen und Alkali- oder Erdalkalilösungen oder -suspensionen oder bei gleichzeitiger Zugabe äquivalenter Mengen von Eisen(III)ionen und Alkali- oder Erdalkalibasen, -lösungen oder -suspensionen unter Verwendung der Oxidationsmittel durchgeführt wird. In ähnlicher Weise kann der Lepidokrokit auch erhalten werden, wenn in einer ersten Stufe eine Aufschlämmung von kolloidalen Lepidokrokit-Keimen erzeugt wird, indem man Eisen(II)chlorid mit wäßrigem Alkali vereinigt, wobei die Konzentration des Eisen(II)chlorids etwa 29,95 bis 59,9 g pro 1 beträgt, und das erhaltene Gemisch kräftig rührt, während ein Sauerstoff enthaltendes Gas eingeführt wird bis der pH-Wert des Gemisches zwischen 2,9 und 4,1 liegt und dann in einer zweiten Stufe die Aufschlämmung unter kräftigem Rühren bei einer Temperatur von 26,7 bis 60°C und einem pH-Wert zwischen 2,9 und 4,1 in Gegenwart eines Überschusses von Eisen(II)chlorid aufrechterhält, während gleichzeitig und kontinuierlich Alkali und ein Sauerstoff enthaltendes Gas eingeführt wird, bis 1,2 bis 5 Gewichtsteile des Gesamtproduktes pro Gewichtsteil des Keimes gebildet worden sind.

Erfindungsgemäß wird nun ein unpolarer Fettsäureglycerinester bei der Herstellung des Gamma-Eisen(III)oxidhydroxids in die wäßrige Reaktionssuspension eingebracht.

Entsprechende Ester des Glycerins mit Fettsäuren mit 8 bis 23 Kohlenstoffatomen haben einen Erstarrungspunkt unter 20°C. Sie finden sich, meist in Form von Mischungen, in einer Reihe von natürlichen Ölen, wie z. B. Erdnußöl, Sojabohnenöl, Rhizinusöl oder Olivenöl. Sie sind weder wasserlöslich noch oberflächenaktiv oder polar. Sie werden in einer Menge von 0,5 bis 10, vorzugsweise 0,8 bis 5,0 %, bezogen auf das Eisenoxidhydroxid, eingesetzt.

3

EP 0 097 900 B1

Die Zugabe der genannten Ester in die Reaktionssuspension ist zu einem beliebigen Zeitpunkt möglich. Es hat sich jedoch als besonders vorteilhaft erwiesen, den Fettsäureglycerinester während der Aufwachsphase des Gamma-Eisen(III)oxidhydroxids in die Reaktionssuspension bei einem pH-Wert zwischen 2 und 5 einzubringen. Nach dem Ende der Aufwachsphase wird das gebildete Gamma-Eisen(III)oxidhydroxid abfiltriert, zur Entfernung der anorganischen Salze mit Wasser gewaschen und getrocknet. Die Adsorption der organischen Substanz beträgt danach zwischen 90 und 95 % der eingebrachten Menge.

Das so ausgerüstete Gamma-Eisen(III)oxidhydroxid wird nun durch Erhitzen auf eine Temperatur zwischen 280 und 620°C, zweckmäßigerweise in kontinuierlichen Reduktionsstufen mit einer mittleren Verweilzeit von 30 bis 150 Minuten und vorzugsweise durch zusätzliches Überleiten eines reduzierenden Gases und/oder eines Inertgases, üblicherweise Stickstoff, zum Magnetit reduziert.

Der durch die Reduktion erhaltene Magnetit wird gegebenenfalls anschließend mit sauerstoffhaltigen Gasen zweckmäßigerweise durch Überleiten von Luft, bei 150 bis 450°C zu nadelförmigen ferrimagnetischen Eisenoxiden der Formel $FeO_x$ mit Werten für x von größer 1,33 bis 1,50 oxidiert. Üblicherweise wird die Oxidation bis zur Stufe des Gamma-Eisen(III)oxid geführt (x = 1,5).

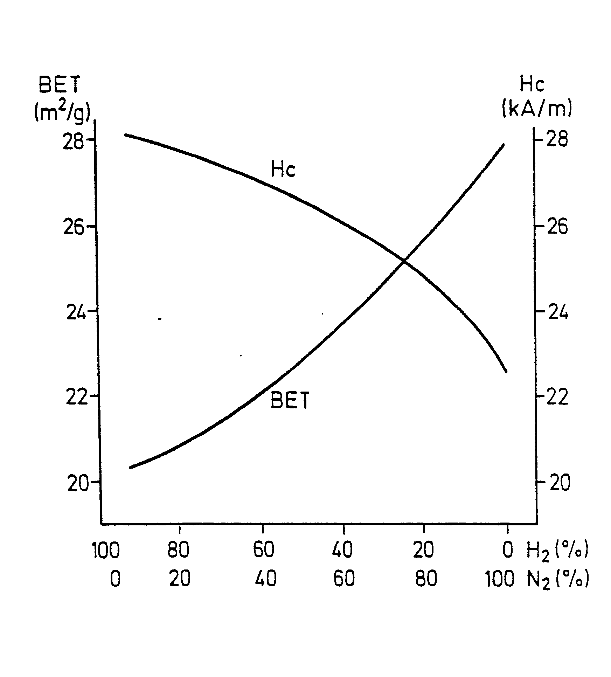

Bei der Ausarbeitung des erfindungsgemäßen Verfahren hat sich ergeben, daß eine gleichzeitige Zudosierung von reduzierenden Gasen, z. B. von Wasserstoff, bei der beschriebenen Reduktion mittels zersetzlicher organischer Stoffe, eine Möglichkeit zur Beeinflussung von Koerzitivfeldstärke und spezifischer Oberfläche des magnetischen Endmaterials ergibt. Durch Einwirken entsprechender Gemische aus Wasserstoff und Stickstoff beim Reduktionsschritt lassen sich Werte von Koerzitivfeldstärke und spezifischer Oberfläche in weiten Grenzen einstellen, wie beispielhaft in der Figur gezeigt.

Mit der Zugabe unpolarer Fettsäureglycerinester als die Reduktion zum Magnetit bewirkende zersetzliche organische Verbindung direkt in die Reaktionssuspension der Gamma-Eisen(III)oxidhydroxid-Herstellung gemäß dem erfindungsgemäßen Verfahren wird eine Ausrüstung dieser Teilchen ohne Beschränkung der Verfahrensbedingungen bewirkt. Die Zudosierung ist einfach und erfordert keine der sonst üblichen Verfahrensschritte des Mischens, Aufziehens aus Lösung, der gasförmigen Beaufschlagung u.ä. Auch tritt kein Schäumen auf, wie es bei den vorbekannten Zusätzen, z. B. mit Natriumstearat, beim Durchleiten der Luft durch die Reaktionsmischung der Fall ist und wodurch Schwierigkeiten bei der Durchführung des Verfahrens verursacht werden. Obwohl die Fettsäureglycerinester unpolar sind, ziehen sie dennoch auf die Teilchen auf. Da dies während der Bildung der Teilchen in der Suspension geschieht, sind bereits die einzelnen Teilchen beaufschlagt. Agglomerate müssen nicht zuerst mechanisch getrennt werden, wobei u.U. die Nadelform der Gamma-Eisen(III)oxidhydroxid-Teilchen beschädigt wird. Ein besonderer Vorteil der Fettsäureglycerinester ist, daß sie wegen ihres unpolaren Charakters bei dem Aufwachsen der Teilchen nicht deren Geometrie beeinflussen. Wegen der gleichmäßigen Ausrüstung läuft die Reduktion einheitlich und vor allem gleichmäßig in Bezug auf die Masse der Teilchen ab.

Die erfindungsgemäß hergestellten nadelförmigen, ferrimagnetischen Eisenoxide, insbesondere das auf diese Weise erhältliche Gamma-Eisen(III)-oxid, unterscheiden sich deutlich von den nach bekannten Umwandlungsverfahren erhältlichen Gamma-Eisen(III)-oxiden durch eine besondere Einheitlichkeit des Materials, durch einen guten Erhalt der Nadelform und durch eine besonders enge Schaltfeldstärkenverteilung. Sie eignen sich deshalb in hervorragender Weise zur Herstellung magnetischer Aufzeichnungsträger mit einer sehr guten Tiefenaussteuerbarkeit sowie einer überdurchschnittlichen Höhenaussteuerbarkeit bei geringem Betriebsrauschen und guter Kopierdämpfung.

Zur Herstellung von magnetischen Schichten wird das Gamma-Eisen(III)oxid in polymeren Bindemitteln dispergiert. Als Bindemittel eignen sich für diesen Zweck bekannte Verbindungen, wie Homo- und Mischpolymerisate von Polyvinylderivaten, Polyurethanen, Polyestern und ähnliche. Die Bindemittel werden in Lösungen in geeigneten organischen Lösungsmitteln verwendet, die gegebenenfalls weitere Zusätze enthalten können. Die magnetischen Schichten werden auf starre oder biegsame Träger wie Platten, Folien und Karten aufgebracht.

Die Erfindung sei anhand folgender Beispiele im Vergleich zu Versuchen nach dem Stand der Technik näher erläutert.

Die spezifische Oberfläche der Pigmente wird nach BET bestimmt, d.h. an gewogenen evakuierten, gasfreien Pigmentproben wird Stickstoff adsorbiert. Die Differenzmenge Stickstoff vor und nach Adsorption wird ins Verhältnis zu Einwaage gesetzt.

Die Bestimmung der mittleren Kristallitgröße in den einzelnen Teilchen geschieht durch Röntgenbeugung. Mit einem Siemens-Zählrohrgoniometer wird an einer Pulverprobe das Reflexprofil, z. B. des (911)-Reflexes, vermessen. Nach Berücksichtigung der Apparatekonstante wird daraus die mittlere Kristalligröße abgeleitet. Als Strahlungsquelle dient z. B. die eisengefilterte $K\alpha$-Linie des Kobalts.

Die magnetischen Pulverwerte werden durch Messung einer auf ein Stopfgemisch von d = 1,2 $g/cm^3$ gebrachten Oxidprobe mit einem konventionellen Schwingmagnetometer bei 100 kA/cm Meßfeldstärke bestimmt. Die Koerzitivfeldstärke (Hc) wird in [kA/m], die Remanenz (Mr/$\rho$) und die spezifische Magnetisierung (Mm/$\rho$) werden in [$nTm^3/g$] angegeben.

Ebenfalls mit einem Schwingmagnetometer werden die Magnetbandproben bei einer Feldstärke von 100 kA/m unersucht. Angegeben wird die Koerzitivfeldstärke Hc, die remanente Magnetisierung Mr in [mT] und der Richtfaktor Rf., d.h. das Verhältnis der remanenten Magnetisierung längs zur Vorzugsrichtung quer dazu. Die Messung der Tiefen- und Höhenaussteuerbarkeit erfolgt nach DIN 45 512 Teil II gegen das IEC-Referenzband 1. Das Betriebsrauschen (Ruhegeräuschspannungsabstand über A-Filter gemessen, RGA), ist auf das IEC 1

4

Bezugsband bezogen, welches gleich OdB gesetzt ist.

Die Verteilung der Schaltfeldstärken wird mit zunehmender Ausrichtung der Teilchen im magnetischen Feld, d.h. mit zunehmender Rechteckigkeit S = Mr/Ms, enger, und das Feld zum Schalten von 50 % der Teilchen, die Remanenzkoerzitivkraft Hr, kleiner.

S muß mit Sättigungsfeldern von mindestens der 10-fachen Koerzitivkraft gemessen werden. Bei den Beispielen erfolgt die Messung bei $8 \cdot 10^5$ A/m. Je niederer der gemessene Wert $h_{25}$ ist, umso enger die Verteilung der Schaltfeldstärke der gemessenen Probe.

**Beispiel 1**

In einem 30 $m^3$ Rührbehälter wurden 17,2 $m^3$ 8,5 %-ige Eisen(II)-chloridlösung vorgelegt und 55 % dieser Lösung unter Rühren bei 24°C mit 3,20 $m^3$ 15 %-iger Natronlauge ausgefällt. Die Überprüfung ergab nach der Fällung einen pH-Wert von 6,4 bis 7,2. Anschließend wurden bei der gleichen Temperatur unter Rühren 1650 $m^3$ Luft/Std. eingedüst. Nach 3,5 Stunden Lufteinleitung fiel der pH-Wert der Suspension ab. Bei einem pH-Wert von 3 wurde die Suspension auf 33°C aufgeheizt und dann weiterhin 15 %-ige Natronlauge zugeleitet. Die Zuleitung der Natronlauge war mit der pH-Messung gekoppelt, welche auf einen Wert von 4,6 ± 0,2 eingestellt war. Die Menge der eingeleiteten Luft betrug ab der Temperaturerhöhung auf 33°C 2200 $m^3$/Std. Nach einer Stunde Lufteinleitung bei 33°C und pH 4,6 ± 0,2 wurden zur Suspension 25 kg eines Glycerinsäureestergemisches mit einer Jodzahl von 90, einem Erstarrungspunkt von +6°C und einer Kettenlänge von 14 bis 18 C-Atomen zugegeben. Nach weiteren 3 Stunden Lufteinleitung betrug die Oxidationsgeschwindigkeit nur noch 2 % des Wertes zu Beginn der Aufwachsphase. Die Reaktion wurde daraufhin abgebrochen und die Suspension in herkömmlichen Filtrierapparaten, von Chlorionen mit vollentsalztem Wasser auf einen Wert von 0,1 % Cl, bezogen auf trockene $\gamma$-Eisenoxidhydroxid, freigewaschen.

Die Trocknung des granulierten Filtergutes erfolgte bei 150°C in üblichen Trockenschränken. Die spezifische Oberfläche nach der BET-Methode wurde mit 28,5 $m^2$/g bestimmt; der Kohlenstoffanteil des Pigmentes betrug 1,9 %, die durchschnittliche Nadellänge 0,5 μm bei einem Längen- zu Dickenverhältnis von 14 : 1.

Das Produkt wurde anschließend durch einen in 4 Heizzonen unterteilten Drehrohrofen kontinuierlich, in einer Menge von 78 kg-pro Stunde, gefördert, wobei noch gleichzeitig eine auf 500°C aufgeheizte Gasmischung von 11 $m^3$ Wasserstoff und 9 $m^3$ Stickstoff zusammen mit dem Feststoff eingeleitet wurde. Die Innentemperaturen der 4 Heizzonen in der Reihenfolge vom Produkteinlauf zum Auslauf betrugen 350, 440, 540, 550°C. Nach einer auf 40 Minuten eingestellten Verweilzeit fiel der Magnetit über eine stickstoffgespülte Schleuse in einen zweiten Drehrohrofen, in welchen es bei einer mittleren Verweilzeit von 30 Minuten bei einer Innentemperatur von 260°C mittels eines Luftstromes zu $\gamma$=Eisen(III)-oxid oxidiert wurde. Die an dem erhaltenen Produkt gemessenen Werte sind aus Tabelle 1 ersichtlich.

**Beispiel 2**

Es wurde wie in Beispiel 1 beschrieben verfahren, jedoch wurden anstelle von 11 $m^3$ Wasserstoff und 9 $m^3$ Stickstoff stündlich 20 $m^3$ Wasserstoff in den Reduktionsofen eingeleitet.

Die Meßergebnisse sind aus Tabelle 1 ersichtlich.

**Beispiel 3**

Es wurde wie in Beispiel 1 beschrieben verfahren, jedoch wurden anstelle von 11 $m^3$ Wasserstoff und 9 $m^3$ Stickstoff stündlich 20 $m^3$ Stickstoff in den Reduktionsofen eingeleitet.

Die Meßergebnisse sind aus Tabelle 1 ersichtlich.

**Beispiel 4**

Es wurde wie in Beispiel 1 beschrieben verfahren, jedoch war der in der gleichen Menge bei der $\gamma$-FeOOH-Herstellung zugegebene Ester Glyzerinpalmitat mit einer Jodzahl von 50.

Die Meßergebnisse sind aus Tabelle 1 ersichtlich.

**Beispiel 5**

Es wurde wie in Beispiel 1 beschrieben verfahren, jedoch betrug die bei der γ-FeOOH-Herstellung zugegebene Menge der Estermischung 32 kg.

Die Ergebnisse sind aus Tabelle 1 ersichtlich.

**Beispiel 6**

Es wurde wie in Beispiel 1 beschrieben verfahren, jedoch waren die Innentemperaturen des Reduktionsofens, vom Einlauf her, wie folgt eingestellt: 320, 420, 490, 530°C.

Die Meßergebnisse sind aus Tabelle 1 ersichtlich.

**Vergleichsversuch 1**

Es wurde wie in Beispiel 1 beschrieben verfahren, jedoch wurde das Glycerinsäureestergemisch erst am Ende der Aufwachsphase zugegeben. Nach einer Stünde Rühren ohne Luft wurde filtriert und wie in Beispiel 1 weiter verfahren.

Die Meßergebnisse sind aus Tabelle 1 ersichtlich.

**Vergleichsversuch 2**

Es wurde wie in Beispiel 1 beschrieben verfahren, jedoch war die der γ-FeOOH-Suspension zugesetzte organische Verbindung Trikresylphosphat.

Die Meßergebnisse sind aus Tabelle 1 ersichtlich.

**Vergleichsversuch 3**

Es wurde wie in Beispiel 1 beschrieben verfahren, jedoch war die der γ-FeOOH-Suspension zugesetzte organische Verbindung Sojalecithin.

Die Meßergebnisse sind aus Tabelle 1 ersichtlich.

**Vergleichsversuch 4**

Es wurde wie in Beispiel 1 beschrieben verfahren, jedoch war die der γ-FeOOH-Suspension zugesetzte organische Verbindung Stearinsäure mit einem Fließpunkt von 55°C. Nach der Filtration und Trocknung ergab eine Analyse, daß die Restmenge an Chloridionen 0,6 % betrug, obwohl das Waschwasser vor Filtrationsende Chloridionen-frei war.

Die Meßergebnisse sind aus Tabelle 1 ersichtlich.

**Vergleichsversuch 5**

Es wurde γ-FeOOH entsprechend Beispiel 1 hergestellt, jedoch unterblieb die Zugabe einer organischen Substanz. Nach Filtration, Auswaschung und Trocknung des Lepidokrokits wurde das granulierte Pigment in einem 30 m³-Rührkessel aufgeschlämmt. Danach wurden 25 kg des unter Beispiel 1 beschriebenen Glyzerinsäureestergemisches zugegeben und unter Aufheizen auf 35°C weitere 5 Stunden gerührt. Dann wurde die so erhaltene Suspension filtriert, und das Filtergut bei 150°C getrocknet. Sonstige Bedingungen wie in Beispiel 1.

Die Meßergebnisse sind aus Tabelle 1 ersichtlich.

**Vergleichsversuch 6**

Es wurde γ-FeOOH entsprechend Beispiel 1 hergestellt, jedoch unterblieb die Zugabe des Estergemisches. Beim Produkteinlauf in den Reduktionsofen in der Menge, dem Verweilzeitspektrum bei demselben Gasgemisch wie bei Beispiel 1, wurde das Estergemisch in einer Menge von 2,5 %, bezogen auf das einlaufende Produkt, kontinuierlich eingedüst. Sonstige Bedingungen wie bei Beispiel 1.

Die Meßergebnisse sind aus Tabelle 1 ersichtlich.

**Vergleichsversuch 7**

Es wurde γ-FeOOH entsprechend Beispiel 1 hergestellt, jedoch unterblieb die Zugabe des Estergemisches. Beim Produkteinlauf in den Reduktionsofen wurde vor der Einförderschnecke Stearinsäure in das Produktzuführungsrohr, in einer Menge von 2,5 %, bezogen auf das einlaufende Produkt, kontinuierlich zudosiert. Sonstige Bedingungen wie Beispiel 1.

Die Meßergebnisse sind aus Tabelle 1 ersichtlich.

**Vergleichsversuch 8**

Es wurde γ-FeOOH entsprechend Beispiel 1 hergestellt, jedoch unterblieb die Zugabe des Estergemisches. Beim Produkteinlauf in den Reduktionsofen wurde gleichzeitig ein Stickstoffstrom in einer Menge von 30 m³/Std. durch einen Behälter, welcher mit auf 270°C aufgeheizter Stearinsäure gefüllt war, mit dem Produkt in einer Menge von 78 kg/Std. durch den Drehrohrofen geleitet. Sonstige Bedingungen wie Beispiel 1.

Die Meßergebnisse sind aus Tabelle 1 ersichtlich.

**Tabelle 1**

| Beispiel | spez. Oberfläche nach BET | Kristallit- größe | Hc [kA/m] | Mr/ [nTm³/g] | Mm/ [nTm³/g] | % C im FeOOH | % C im γ-Fe₂O₃ |
|---|---|---|---|---|---|---|---|
| 1 | 22,5 | 220 | 26,7 | 38 | 81 | 1,9 | 0,55 |
| 2 | 20,1 | 260 | 28,2 | 39 | 82 | 1,9 | 0,50 |
| 3 | 28,0 | 235 | 22,5 | 38 | 81 | 1,9 | 0,61 |
| 4 | 21,9 | 240 | 27,0 | 38,5 | 82 | 2,4 | 0,68 |
| 5 | 23,1 | 222 | 25,9 | 38 | 82 | 1,9 | 0,58 |
| 6 | 23,8 | 210 | 24,8 | 39 | 83 | 1,9 | 0,60 |
| Vergleichs- versuch | | | | | | | |
| 1 | 21,3 | 250 | 25,4 | 38 | 81 | 1,8 | 0,55 |
| 2 | 18,9 | 290 | 27,2 | 38 | 80 | 1,5 | 0,35 |
| 3 | 19,5 | 285 | 26,8 | 37,5 | 79 | 1,7 | 0,42 |
| 4 | 17,8 | 270 | 27,8 | 38,5 | 81 | 1,9 | 0,51 |
| 5 | 19,8 | 295 | 27,3 | 39 | 82,5 | 1,4 | 0,30 |
| 6 | 20,3 | 300 | 26,9 | 38 | 80 | - | 0,38 |
| 7 | 20,5 | 280 | 26,8 | 38,5 | 83 | - | 0,40 |
| 8 | 18,2 | 340 | 29,2 | 40,5 | 84 | - | 0,27 |

**Beispiel 7**

In einer 5 l Glasapparatur wurde die Lösung von 358 g FeCl₂ · 4 H₂O in 2 l Wasser vorgelegt. Dazu wurden im Stickstoffstrom bei lebhaftem Rühren in 10 min 1 l 1,8 n-NaOH getropft. Nach weiteren 10 min wurde der Gasstrom auf 200 l Luft/h umgestellt. Sobald der pH unter 4 abgesunken war, wurde unter fortdauerndem Einleiten von Luft der pH-Wert durch Zutropfen von 1,8 n-NaOH auf 5 bis 6 eingestellt und dort gehalten. Die Reaktion war beendet, sobald der pH-Wert auch ohne Laugezugabe konstant blieb. Das war nach Zugabe von 1 050 ml Lauge der Fall.

Zu diesem Zeitpunkt wurden jeweils 6,4 ml Öl (s. Tabelle 2) zugegeben und das Gemisch 1/2 Stunde nachgerührt. Dann wurde die Fällung abgesaugt, zweimal gewaschen und bei 80°C im Vakuumtrockenschrank getrocknet.

Zur Umwandlung in γ-Fe₂O₃ wurde das Produkt 30 min lang in einer 500 ml Quarzdrehkugel im Strom von 5 N₂/h auf 520°C erhitzt und anschließend 30 min lang bei 350°C im Strom von 100 l Luft/h oxidiert. Die Meßergebnisse sind in Tabelle 2 angegeben.

**Tabelle 2**

| Versuch | verwendetes Öl | $S_{N_2}$ [m²/g] | $H_c$ [kA/m] | $M_m/\rho$ [nTm³/g] | $M_r/\rho$ [nTm³g] |
|---|---|---|---|---|---|
| a | Olivenöl | 27,6 | 23,6 | 74 | 38 |
| b | Erdnußöl | 26,7 | 23,5 | 78 | 40 |
| c | Sojabohnenöl | 21,4 | 23,9 | 77 | 40 |

**Beispiele A - O**

Nach folgender Vorschrift werden die magnetischen Materialien gemäß den Beispielen 1 bis 6 und Vergleichsversuchen 1 bis 8 zu Magnetbändern verarbeitet.

Dazu werden in einer Stahlkugelmühle mit einem Füllvolumen von 6000 Volumeneinheiten, die mit 72 Umdrehungen pro Minute betrieben wird, 9000 Teile Stahlkugeln, 900 Teile des entsprechenden magnetischen Materials, 22,5 Teile eines langkettigen amphoteren, organophilen Dispergiermittels, je 4,5 Teile eines Siliconöles und eines isomeren Carbonsäuregemische mit einem Fließpunkt <5°C, 126 Teile eines handelsüblichen isocyanatfreien Polyestermethans aus Adipinsäure, Butandiol-1,4 und 4,4-Dicyanatodiphenylmethan mit einem K-Wert von 61 (gemessen 1 %-ige Lösung in Tetrahydrofuran) und 54 Teile eines PVC-Maleinsäureethylester-Copolymeren mit einem K-Wert von 59 (ebenfalls als 1 %-ige Lösung in Tetrahydrofuran gemessen), sowie 2200 Teile eines Gemisches aus gleichen Teilen von Tetrahydrofuran und 1,4-Dioxan zugegeben, wobei die Eingaben der angegebenen Bindemittel in Form ihrer gemeinsamen Lösung in dem genannten Lösemittelgemisch erfolgt. Die Gesamtmischung wird in der Kugelmühle 80 Stunden bei einer Mischungstemperatur von 35°C angerieben. Die so erhaltene Magnetdispersion wird filtriert und anschließend mit einer üblichen Beschichtungseinrichtung auf eine 12 µm dicke Polyethylenterephthalatfolie gegossen, so daß nach Trocknung in einem Trockenkanal und anschließendem Glättvorgang mit auf 85°C beheiztem Mehrwalzenkalander auf einen Rz-Wert der Schicht von 0,10 µm, gemessen mit einem Meßgerät der Firma Perthen, Hannover, eine Schichtdicke von 4,1 µm verbleibt. Im Bereich der noch nassen Schicht des Trockenkanals befindet sich dabei ein über die gesamte Breite der Magnetschicht reichender Magnet, welcher die Magnetteilchen in die gewünschte Vorzugsrichtung dreht. Die so hergestellten Magnetfolien werden in Magnetbänder von 3,81 mm Breite geschnitten.

Die Meßergebnisse an den einzelnen Magnetbändern sind in Tabelle 3 aufgeführt.

**Tabelle 3**

| Beispiel | Material | Hc [kA/m] | Mr [mT] | Rf. | Aussteuerbarkeit bei RGA-Wert 1 kHz [dB] | 10 kHz [dB] | Wert [dB] | Schaltfeldstärke $h_{25}$ (bei $H_m$ = 800 kA/m) |
|---|---|---|---|---|---|---|---|---|
| A | Beispiel 1 | 26,3 | 170 | 3,3 | +1,0 | +1,5 | -0,5 | 0,26 |
| B | Beispiel 2 | 27,2 | 168 | 3,2 | +0,8 | +1,9 | -0,8 | 0,26 |
| C | Beispiel 3 | 22,5 | 162 | 3,1 | +1,5 | +0,2 | 0 | 0,26 |
| D | Beispiel 4 | 26,2 | 172 | 3,4 | +1,1 | +1,6 | -0,4 | 0,27 |
| E | Beispiel 5 | 25,2 | 175 | 3,3 | +1,0 | +1,2 | -0,2 | 0,26 |
| F | Beispiel 6 | 24,1 | 177 | 3,2 | +1,4 | +0,6 | 0 | 0,27 |
| G | Vergleichsversuch 1 | 25,9 | 165 | 2,9 | +0,7 | +0,3 | -0,9 | 0,29 |
| H | Vergleichsversuch 2 | 26,0 | 155 | 2,8 | +0,8 | 0 | -1,0 | 0,30 |
| J | Vergleichsversuch 3 | 25,9 | 150 | 2,7 | +0,7 | +0,3 | -0,5 | 0,31 |
| K | Vergleichsversuch 4 | 26,7 | 145 | 2,4 | +0,3 | -0,5 | -1,5 | 0,33 |
| L | Vergleichsversuch 5 | 26,0 | 152 | 2,6 | +0,5 | +0,2 | -0,5 | 0,31 |
| M | Vergleichsversuch 6 | 25,8 | 155 | 2,7 | +0,5 | +0,5 | -0,8 | 0,31 |
| N | Vergleichsversuch 7 | 25,7 | 153 | 2,7 | +0,6 | +0,3 | -0,7 | 0,32 |
| O | Vergleichsversuch 8 | 28,0 | 148 | 2,3 | -0,5 | +1,8 | -1,8 | 0,34 |

**Patentansprüche**

1. Verfahren zur Herstellung nadelförmiger ferrimagnetischer Eisenoxide durch Versetzen von Eisen(II)chloridlösungen mit Alkali- oder Erdalkalibasen und Oxidieren des Eisen(II)hydroxid-Niederschlags mittels sauerstoffhaltiger Gase zum Gamma-Eisen(III)oxidhydroxid, Reduktion des Gamma-Eisen(III)oxidhydroxids bei Temperaturen zwischen 280 und 620°C mittels in diesem Temperaturbereich in Gegenwart von Eisenoxid zersetzlichen organischen Verbindungen zum Magnetit und gegebenenfalls anschließende Oxidation des Magnetits mit sauerstoffhaltigen Gasen bei 150 bis 450°C zum nadelförmigen ferrimagnetischen Eisenoxid der Formel $FeO_x$ mit Werten fur x von größer 1,33 bis 1,50. dadurch gekennzeichnet, daß die organische Verbindungen in der Form von unpolaren Fettsäureglycerinestern in einer Menge von 0,5 bis 10 Gew.-%, bezogen auf das Eisenoxidhydroxid, in die während der Synthese des Gamma-Eisen(III)oxidhydroxids vorhandene Suspension eingebracht werden.

2. Verfahren zur Herstellung nadelförmiger ferrimagnetischer Eisenoxide durch Versetzen von Eisen(II)chloridlösungen mit Alkali- oder Erdalkalibasen und Oxidieren des Eisen(II)hydroxid-Niederschlags mittels sauerstoffhaltiger Gase zum Gamma-Eisen(III)oxidhydroxid, Reduktion des Gamma-Eisen(III)oxidhydroxids bei Temperaturen zwischen 280 und 620°C mittels in diesem Temperaturbereich in Gegenwart von Eisenoxid zersetzlichen organischen Verbindungen unter gleichzeitigem Überleiten eines reduzierenden Gases und/oder eines Inertgases zum Magnetit und gegebenenfalls anschließende Oxidation des Magnetits mit sauerstoffhaltigen Gasen bei 150 bis 450°C zum nadelförmigen ferrimagnetischen Eisenoxid der Formel $FeO_x$ mit Werten für x von größer 1,33 bis 1,50, dadurch gekennzeichnet, daß die organische Verbindungen in der Form von unpolaren Fettsäureglycerinestern in einer Menge von 0,5 bis 10 Gew.-%, bezogen auf das Eisenoxidhydroxid, in die während der Synthese des Gamma-Eisen(III)oxidhydroxids vorhandene Suspension eingebracht werden.

**Claims**

1. A process for the preparation of an acicular ferrimagnetic iron oxide by adding an alkali metal base or an alkaline earth metal base to an iron(II) chloride solution, and oxidizing the precipitated iron(II) oxide hydroxide by means of oxygen-containing gases to gamma-iron(III) oxide hydroxide, reducing the latter to magnetite, at from 280 to 620°C, by means of an organic compound which is decomposably in this temperature range in the presence of iron oxide, and, if desired, then oxidizing the magnetite with oxygen-containing gases, at from 150 to 450°C, to acicular ferrimagnetic iron oxide of the formula $FeO_x$, where x is from above 1.33 to 1.50, wherein the organic compound in the form of a non-polar glycerol ester of a fatty acid is introduced in an amount of from 0.5 to 10 % by weight, based on the iron oxide hydroxide, into the suspension present during the synthesis of the gamma-iron(III) oxide hydroxide.

2. A process for the preparation of an acicular ferrimagnetic iron oxide by adding an alkali metal base or an alkaline earth metal base to an iron(II) chloride solution, and oxidizing the precipitated iron(II) oxide hydroxide by myans of oxygen-containing gases to gamma-iron(III) oxide hydroxide, reducing the latter to magnetite, at from 280 to 620°C, by means of an organic compound which is decomposable in this temperature range in the presence of iron oxide, under a stream of a reducing gas und/or an inert gas, and, if desired, then oxidizing the magnetite with oxygen-containing gases, at from 150 to 450°C, to acicular ferrimagnetic iron oxide of the formula $FeO_x$, where x is from above 1.33 to 1.50, wherein the organic compound in the form of a non-polar glycerol ester of a fatty acid is introduced in an amount of from 0.5 to 10 % by wyight, based on the iron oxide hydroxide, into the suspension present during the synthesis of the gamma-iron(III) oxide hydroxide.

**Revendications**

1. Procédé de préparation d'oxydes de fer ferrimagnétiques aciculaires par addition de solutions de chlorure de fer (II) avec des bases alcalines ou alcalino-terreuses et oxydation en hydroxyde d'oxyde de fer (III)-γ, du précipité d'hydroxyde de fer (II), au moyen de gaz oxygénés, réduction en magnétite de l'hydroxyde d'oxyde de fer (III)-γ, à des températures comprises entre 280 et 620°C, au moyen de composés organiques décomposables, dans cette zone de température, en présence d'oxyde de fer, et éventuellement oxydation suivante de la magnétite, avec des gaz oxygénés entre 150 et 450°C, en oxyde de fer ferrimagnétique aciculaire de formule $FeO_x$, avec des valeurs pour x plus grandes que 1,33 à 1,50, caractérisé par le fait que l'on introduit les composés organiques, sous forme d'esters de glycérol et d'acides gras non polaires, à raison de 0,5 à 10 % en poids, par rapport à l'hydroxyde d'oxyde de fer, dans la suspension existant pendant la synthèse de l'hydroxyde de fer (III)-γ.

2. Procédé de préparation d'oxyde de fer ferrimagnétiques aciculaires par addition de solutions de chlorure de fer (II) avec des bases alcalines ou alcalino-terreuses et oxydation en hydroxyde d'oxyde de fer (III)-γ, du précipité d'hydroxyde de fer (II), au moyen de gaz oxygénés, réduction en magnétite de l'hydroxyde d'oxyde de fer (III)-γ, à des températures comprises entre 280 et 620°C, au moyen de composés organiques décomposables, dans cette zone de température, en présence d'oxyde de fer, avec passage simultané d'un gaz réducteur et/ou d'un gaz inerte, et éventuellement oxydation suivante de la magnétite, avec des gaz oxygénés, entre 150 et 450°C, en oxyde de fer ferrimagnétique aciculaire de formule $FeO_x$, avec des valeurs pour x plus grandes que 1,33 à 1,50, caractérisé par le fait que l'on introduit les composés organiques, sous forme d'esters de glycérol et d'acides gras non polaires, à raison de 0,5 à 10 % en poids, par rapport à l'hydroxyde d'oxyde de fer, dans la suspension existant pendant la synthèse de l'hydroxyde de fer (III)-γ.